**Europäisches Patentamt**

**European Patent Office**

**Office européen des brevets**

(19)

(11) Veröffentlichungsnummer : **0 044 005**
**B1**

(12)  # EUROPÄISCHE PATENTSCHRIFT

(45) Veröffentlichungstag der Patentschrift :
26.09.84

(21) Anmeldenummer : 81105169.7

(22) Anmeldetag : 03.07.81

(51) Int. Cl.³ : **C 04 B 11/02, C 01 F 11/46**

(54) **Herstellung von Gipshalbhydrat mit Wärmemüll, wässriger H2SO4 und schwefelsauren Salzen.**

(30) Priorität : 14.07.80 AT 3658/80
17.02.81 DE 3105709
05.05.81 DE 3117641

(43) Veröffentlichungstag der Anmeldung :
20.01.82 Patentblatt 82/03

(45) Bekanntmachung des Hinweises auf die Patenterteilung : 26.09.84 Patentblatt 84/39

(84) Benannte Vertragsstaaten :
**AT BE CH DE FR GB IT LI LU NL SE**

(56) Entgegenhaltungen :
**EP-A- 0 007 610**
**EP-A- 0 012 488**
**DE-A- 2 803 764**
**GB-A- 1 101 771**
**GB-A- 1 184 585**
**GB-A- 1 248 037**

(73) Patentinhaber : **HIS Handels- und Industriebedarf
GmbH
Reitzensteinstrasse 20
D-4350 Recklinghausen (DE)**

(72) Erfinder : **Quante, Heinrich
Behringstrasse 23
D-4350 Recklinghausen (DE)**

(74) Vertreter : **Schulte, Jörg, Dipl.-Ing.
Hauptstrasse 2
D-4300 Essen-Kettwig (DE)**

**Beschreibung**

Die Erfindung betrifft ein Verfahren zur Herstellung von Alphagipshalbhydrat, insbesondere zur Calcinierung des bei der Rauchgasentschwefelung von Kraftwerken anfallenden Calciumsulfatdihydrates oder eines Chemiegipses. Die Erfindung betrifft weiter eine Anlage zur Durchführung des Verfahrens.

Aufgrund der immer schärfer werdenden Umweltschutzbestimmungen sind die Anforderungen bezüglich der Entschwefelung der Rauchgase insbesondere bei der Verbrennung von Kohle in Kraftwerken immer schärfer geworden. Es sind zahlreiche Verfahren bekannt, bei denen der Schwefel durch Einsatz von Kalkstein und ähnlichen Materialien gebunden werden soll (DE-A-27 08 984, DE-A-27 30 707). Der bei verschiedenen Verfahren anfallende Rauchgasgips ist aber weder abzulagern noch in der anfallenden Form zu verwerten. Daher wird er durch Wärmezufuhr in sogenanntes Gipshalbhydrat umgewandelt. Dieses Material kann dann für die verschiedensten Zwecke im Bereiche der Bauindustrie sowie unter gewissen Voraussetzungen auch als Dammbaumaterial für den untertägigen Bergbau eingesetzt werden (DE-B-29 08 266). Nachteilig bei den bekannten Verfahren ist der hohe Energieaufwand für die Umwandlung des Dihydrates in Halbhydrat. Das gilt auch für das aus der DE-C-12 38 374 bekannte Verfahren, bei dem die Suspension von Calciumsulfatdihydrat in Wasser aufgeheizt und dabei eine bestimmte Erhitzungsgeschwindigkeit vorgesehen ist. Nachteilig bei dem bekannten Verfahren ist außerdem die hohe Endtemperatur, die bei der Erwärmung der Suspension erreicht werden muß, die Verwendung von Impfkristallen und der Einsatz eines Autoklaven.

In Kraftwerken, und zwar insbesondere in den Kraftwerken, in denen der ohne besondere Behandlung nicht einsetzbare Rauchgasgips anfällt, werden erhebliche Mengen Wärmemülls erzeugt, der gegenwärtig weitgehend nutzlos in die Atmosphäre abgegeben wird. Außer bei Kraftwerken fällt auch in der chemischen Industrie, bei den Hüttenwerken und anderen Industriezweigen eine erhebliche Menge Wärmemüll an. Auch der hier anfallende Wärmemüll wird nicht oder nur unzureichend genutzt.

In den Kraftwerken fällt der hier angesprochene Wärmemüll bei rund 130 °C, bei älteren Kraftwerken auch bei 140 °C an. Nachteilig ist, daß der Wärmemüll aufgrund seiner relativ niedrigen Temperaturen und seines Zustandes nicht in der Größenordnung, in der er anfällt, verwertet werden kann.

Der Erfindung liegt daher die Aufgabe zugrunde, ein technisch einfaches, in vorhandene Prozesse integrierbares, quasi kontinuierliches und energieverbrauchsfreundliches Verfahren zur Calcinierung von Rauchgasgips, Chemiegips, Naturgips und ähnlichen Stoffen und eine entsprechende Anlage zu schaffen.

Die Aufgabe wird gemäß der Erfindung dadurch gelöst, daß aus Calciumsulfatdihydrat mit einer Kornfeinheit von kleiner 250 µm und aus wässriger Schwefelsäure eine Dispersion hergestellt und unter Zufuhr von industriellem, staubfreiem Wärmemüll unter Einhaltung einer Aufheizgeschwindigkeit von 1 bis 3 K/min. auf 90 bis 100 °C erwärmt wird, woraufhin die festen Bestandteile von der wässrigen Schwefelsäure getrennt und anschließend bei 105 bis 130 °C getrocknet werden.

Es hat sich überraschend herausgestellt, daß bei einem derartigen Verfahren der mit Temperaturen bis etwa 130 °C anfallende Wärmemüll vorteilhaft verwertet werden kann, da für dieses Verfahren die vorgegebenen Temperaturen ausreichen. Außerdem sind die bei modernen Rauchgasentschwefelungsanlagen anfallenden Mengen an Rauchgasgips mit 70-100 000 t und mehr pro Jahr so hoch, daß der in Kraftwerken anfallende Wärmemüll annähernd ganz für die Herstellung des Gipshalbhydrates aus dem Rauchgasgips eingesetzt werden kann. Soweit auch in anderen Industriezweigen Wärmemüll bzw. Rauchgasgips, Chemiegips oder Naturgips vorhanden ist, kann das Verfahren auf die gleiche Art und Weise verwirklicht werden. Mit Hilfe der eingesetzten wässrigen Schwefelsäure kann der Umwandlungsprozeß bei den genannten Temperaturen durchgeführt werden, wobei das abgespaltene Kristallwasser zunächst zu einer Verdünnung der Dispersion führt. Bei weiterer Wärmemüllzufuhr tritt dann eine Verdunstung des Wassers aus der Dispersion und damit eine Regeneration der wässrigen Schwefelsäure bis zur ursprünglichen Konzentration ein.

Es hat sich herausgestellt, daß während des Calciniervorganges die Viskosität der Dispersion infolge einer Kristallstrukturänderung steigt, wodurch eine merkliche Behinderung der Begasung mit Wärmemüll und damit ein schlechterer Wärmeübergang eintritt. Dieser schlechtere Wärmeübergang ergibt sich insbesondere dadurch, daß der eingeblasene Wärmemüll sich frühzeitig zu größeren Blasen vereinigt, die nur einen geringeren Wärmeübergang erlauben. Ein Verfahren zur Herstellung von Alpha-Gipshalbhydrat mit gutem Wärmeübergang sieht vor, daß die wässrige Schwefelsäure jeweils unter Verdunstung des bei der Dissoziationsreaktion freigesetzten Kristallwassers getrennt aufgeheizt und das Calciumsulfat-Dihydrat dann in die heiße, wässrige Schwefelsäure eingeleitet wird, weiter unter Zufuhr von industriellem, staubfreiem Wärmemüll unter Einhaltung einer Aufheizgeschwindigkeit von 1 bis 3 K/min auf 90 bis 100 °C erwärmt wird, woraufhin die festen Bestandteile von der wässrigen Schwefelsäure getrennt und anschließend bei 105 bis 130 °C getrocknet werden. Dabei kann die wässrige Schwefelsäure wie bisher im Kreislauf geführt werden, nur daß die Regeneration in einem gesonderten Verfahrensabschnitt erfolgt, der jeweils vor der Calcinierung bzw. daran im Anschluß erfolgt. Dabei erweist es sich als vorteilhaft, daß die für die an sich endotherme Reaktion notwendige Wärmemüllzufuhr geringfügig geringer sein kann, weil bei der Calcinierung des Calciumsulfat-Dihydrates eine schwach exotherme Reaktion zwischen Schwefelsäure und Calciumsulfat-Dihydrat eintritt bzw. ausgenutzt werden kann.

Auch für die getrennte Regeneration der wässrigen Schwefelsäure durch Austreiben und Verdunsten des freien Kristallwassers wird Wärmemüll verwendet.

In weiterer Optimierung dieses Verfahrens ist vorgesehen, daß die wässrige Schwefelsäure soweit aufgeheizt wird, daß sich bei Zuleitung des Calciumsulfat-Dihydrates mindestens die Dissoziationstemperatur einstellt. Damit wird der Verfahrensablauf abgekürzt, da eine vollständige Kompensation des durch den Eintrag des Calciumsulfat-Dihydrates von Normaltemperatur in das Dispersionsmedium bedingten Temperaturverlustes gewährleistet ist. Die Dissoziationsreaktion selbst verläuft begünstigt durch gleichbleibend kleine Blasen des eingeleiteten Wärmemülls ab.

Um auch in der gesonderten Verfahrensstufe der Aufheizung des nach dem Abtrennen des Calciumsulfathalbhydrates verbleibenden Dispersionsmediums einen optimalen Wärmeübergang zu gewährleisten, ist gemäß der Erfindung vorgesehen, daß der Wärmemüll bei der Aufheizung der wässrigen Schwefelsäure in der gleichen Strömungsrichtung und in Übereinstimmung mit deren Fließgeschwindigkeit eingeleitet wird. Dadurch wird wirksam die Bildung von größeren Blaseinheiten verzögert, so daß der angestrebte günstige Wärmeübergang bei kleinen Blasen gewährleistet ist.

Für das Verfahren wird wässrige Schwefelsäure als Reaktionsmedium eingesetzt, wobei gemäß einer Ausbildung der Erfindung das Calciumsulfatdihydrat in diese wässrige Schwefelsäure bis zur Erreichung einer Konzentration von 10-50 Gew.-%, vorzugsweise 15-25 Gew.-%, eingeleitet wird. Dabei hat es sich als zweckmäßig herausgestellt, daß Calciumsulfatdihydrat unter ständigem Rühren in die wässrige Schwefelsäure einzuleiten, um eine gleichmäßige Durchmischung zu gewährleisten.

Die Herstellung der notwendigen Dispersion und ein einwandfreier Ablauf des Verfahrens ist gewährleistet, wenn eine schwefelsaure, wässrige Dispersion mit einer Konzentration an Schwefelsäure von 15-55 Gew.-%, vorzugsweise 20 Gew.-%, eingesetzt wird. In diese wässrige Schwefelsäure wird dann das Calciumsulfatdihydrat eingeleitet.

Wärmemüll fällt in der Regel in Form von Dampf oder Warmluft an, wobei beides sich für das Verfahren eignet. Der gewünschte Calcinierungsvorgang wird zweckmäßigerweise so betrieben, daß der industrielle, staubfreie Wärmemüll vorzugsweise in Form von Dampf zur direkten und/oder indirekten Beheizung der wässrigen Schwefelsäure und/oder des Gemisches unter Einhaltung einer Aufheizgeschwindigkeit von 1,5 K/min, eingesetzt wird. Die Aufheitgeschwindigkeit wird dabei wie üblich über Ventileinstellungen geregelt. Ergänzend hierzu hat sich herausgestellt, daß es zweckmäßig ist, die Aufheizgeschwindigkeit von 1,5 K/min einzuhalten, sobald eine Kompensation des beim Aufheizvorganges resultierenden Dampfverlustes durch das beim Calciniervorgang freiwerdende Kristallwasser erfolgt. Dies trifft insbesondere dann zu, wenn die wässrige Schwefelsäure zusammen mit der eingeleiteten Calciumsulfatdihydratdispersion aufgewärmt werden muß.

Zum Einsatz kommt Calciumsulfat-Dihydrat mit einer Kornfeinheit von kleiner 250 µm. Hierzu ist es möglich und zweckmäßig, das bei der Rauchgasentschwefelung anfallende Calciumsulfatdihydrat unmittelbar der Calcinierung zuzuführen, weil dann die oben genannte Forderung der Kornfeinheit in der Regel ohne zusätzliche Maßnahmen eingehalten werden kann, weil die Bildung von Konglomeraten, Teiltrocknung u. ä. dann noch nicht eingetreten ist. Auch kann die Temperatur des Rauchgasgipses, d. h. Calciumsulfatdihydrates, dem Prozeß zugeführt werden.

Der Calcinierungsvorgang wird erfindungsgemäß bei 90 °C abgebrochen, wobei dann das Calciumsulfathalbhydrat von der wässrigen Schwefelsäure getrennt wird. Hierzu werden in bekannter Weise Filter, Zentrifugen oder Schubzentrifugen eingesetzt, wodurch eine einwandfreie Trennung beider Medien sichergestellt ist. In weiterer Vervollkommnung des Verfahrens ist vorgesehen, daß das Calciumsulfathalbhydrat nach der Filtration mittels Calciumcarbonatmehl neutralisiert und dann bei vorzugsweise 115 °C getrocknet wird. In dieser Form ist es dann für die verschiedensten Einsatzzwecke, insbesondere aber für die Verwendung als Dammbaumaterial im Bergbau, geeignet.

Werden bestimmte Kristallstrukturen des bei diesem Verfahren gebildeten Calciumsulfathalbhydrates gewünscht, so kann dies durch gezielte Additivzugabe zur wässrigen Schwefelsäure und/oder der Dispersion erfolgen, wobei als Additive Aluminiumsulfat, Kalialaun, Kaliumsulfat u. ä. zugemischt werden.

Zur Verhinderung bzw. Einschränkung der Bildung von Anhydrit II wird gemäß der Erfindung das Calciumsulfatdihydrat in wässriger, schwefelsaurer Lösung in Gegenwart von schwefelsauren Salzen calciniert. Überraschend kann bei diesem Verfahren die Calcinierwirkung wesentlich verbessert werden, so daß mit geringerem Energieaufwand eine Calcinierung des Chemiegipsdihydrates bzw. Rauchgasentschwefelungsgipsdihydrates ohne unerwünschte Nebenerscheinungen möglich ist. Insbesondere ist der Anteil des die bauphysikalischen Eigenschaften des Alphagipshalbhydrates negativ beeinflussenden Anhydrit II im Endprodukt vernachlässigbar klein.

Es ist bekannt, Chemiegips bzw. Rauchgasentschwefelungsgips in wässrigen Lösungen schwefelsaurer Salze zu Alphagipshalbhydrat zu calcinieren. Es ist darüber hinaus bekannt, die Calcinierung mit Hilfe von wässriger Schwefelsäure positiv zu beeinflussen. Bei Substitution der Schwefelsäure durch bestimmte Schwefelsäuresalze oder umgekehrt der Schwefelsäuresalze durch Schwefelsäure erfolgt auch lediglich eine Substitution der Wirkung der entsprechenden Komponenten. Wird dagegen wie erfindungsgemäß vorgeschlagen, die Schwefelsäure durch bestimmte Schwefelsäuresalze teilweise substituiert bzw. werden wässrige Schwefelsäure und Schwefelsäuresalze in Kombination eingesetzt, so stellt sich überraschenderweise heraus, daß damit die Bildung von Anhydrit II praktisch augeschlossen werden kann. Darüber hinaus ist die Bildung von Alphagipshalbhydrat unter thermodynamisch günstigeren Bedingungen möglich, d. h. bei niedrigerer Temperatur als bei der Anwendung der einzelnen Komponenten. Dieses beruht offensichtlich im wesentlichen darauf, daß ein synergistischer Effekt durch die Kombination von wässriger Schwefelsäure und schwefelsaurem Salz bewirkt wird. Das erfindungsgemäße Verfahren kann vorteilhaft durchgeführt werden, wenn das Calciumsulfatdihydrat in wässriger Lösung von Schwefelsäure und 5 bis 10 Gew.-% Aluminiumsulfatoctadekahydrat calciniert wird. Die relativ geringen Mengen dieses schwefelsauren Salzes bringen thermodynamisch günstigere Bedinungen und verhindern die Bildung des Anhydrit II.

In weiterer Ausbildung der Erfindung ist vorgesehen, daß Calciumsulfatdihydrat in wässriger Lösung von Schwefelsäure und 7,5 bis 15 Gew.-% Kaliumaluminiumsulfatdodekahydrat calciniert wird.

Ebenfalls der Verbesserung der thermodynamischen Bedingungen und der Verhinderung der Bildung von Anhydrit II dient eine Verfahrensvariante, bei der das Calciumsulfatdihydrat in wässriger Lösung von 20 Gew.-% Schwefelsäure und 7,5 bis 15 Gew.-% Magnesiumsulfatheptahydrat calciniert wird.

Zur weiteren Optimierung wird erfindungsgemäß vorgeschlagen, daß Calciumsulfatdihydrat in wässriger Lösung von Schwefelsäure und 5 bis 10 Gew.-% Aluminiumsulfatoctadekahydrat und 7,5 bis 15 Gew.-% Magnesiumsulfatheptahydrat zu calcinieren. Hierbei ist es möglich, jeweils den Anteil einer Komponente durch die andere Komponente zu substituieren oder aber beide in gleichgroßen Mengen einzusetzen.

Bei Einsatz von schwefelsauren Salzen des Magnesiums können jegliche Ausblüherscheinungen verhindert und das elastomechanische Verhalten des Endproduktes verbessert werden, indem dem Alphagipshalbhydrat bei und/oder nach der Trocknung Magnesiumoxid beigemischt wird. Dabei hat es sich herausgestellt, daß es vorteilhaft ist, dem Alphagipshalbhydrat 2,5 bis 6, vorzugsweise 3,5 Gew.-% Magnesiumoxid zuzumischen. Neben der Vermeidung von Ausblüherscheinungen kann bei der Zumischung von Magnesiumoxid überraschenderweise auch eine wesentliche Erhöhung des Wärmespeichervermögens sowie eine Reduzierung der Wärmeleitfähigkeit erreicht werden.

Zur Durchführung des Verfahrens hat sich eine Anlage als zweckmäßig erwiesen, bei der mindestens drei Konverter zu einer Reaktorbatterie gekoppelt und mit Rührwerken ausgerüstet sind. Derartige Reaktorbatterien sind grundsätzlich bekannt, wobei damit ein quasi kontinuierliches Verfahren erreicht werden kann. Dabei ist eine Durchführung des Verfahrens besonders günstig, wenn wie erfindungsgemäß vorgesehen, die Wärmezuleitung in einen Rohrkranz mit nach oben gerichteten Düsen einmündet, der in Höhe des Auslauftrichters angeordnet ist.

Der Heizdampf bzw. die Heizluft perlt dann von unten durch die Dispersion aus wässriger Schwefelsäure und Calciumsulfat-Dihydrat, so daß die einzelnen Bereiche unter gleichzeitiger Auflockerung mit der benötigten Wärme versorgt werden.

Zur Aufteilung des Verfahrens in Calcinierung und Regenerierung der wässrigen Schwefelsäure ist vorgesehen, daß den Konvertern jeweils ein Konzentrator vorgeschaltet ist. In diesem Konzentrator wird die wässrige Schwefelsäuredispersion durch Einleiten von Wärmemüll regeneriert und soweit aufgeheizt, daß sich bei Zuleitung des Calciumsulfatdihydrates in den Konvertern mindestens Dissoziationstemperatur einstellt.

Bei einer gleichmäßigen Aufwärmung bzw. Aufheizung der wässrigen Schwefelsäuredispersion ist es zweckmäßig, die Bildung von größeren Blaseinheiten in dem Konzentrator zu vermeiden. Dies wird effektvoll dadurch erreicht, daß innerhalb des Konzentrators oberhalb des den Wärmemüll zuführenden Einlasses ein unterhalb des Dispersionsspiegels endendes Rohr angeordnet ist. Über dieses innen angeordnete Rohr wird der eingeleitete Wärmemüll insbesondere in Form von Warmluft oder Wasserdampf so in die Dispersion hineingeleitet, daß beide mit etwa gleicher Geschwindigkeit aufsteigen, wobei dann die Dispersion zwischen innerem Rohr und Wand des Konzentrators wieder abwärtsgeführt wird. Die Dimensionierung von Rohr und Konzentrator ist so bemessen und auf die vorgesehene Gasgeschwindigkeit abgestimmt, daß Flüssigkeit und Gas in dem inneren Rohr wie erwähnt, annähernd die gleiche Geschwindigkeit aufweisen.

Die Flüssigkeitsförderung im inneren Rohr wird durch die aufsteigenden Gasblasen bewirkt. Dies trifft generell auch für das Rückströmen der Flüssigkeit bzw. Dispersion zu, wobei dieser Flüssigkeitsstrom erfindungsgemäß noch dadurch gefördert werden kann, daß zwischen Rohrwandung und Wand des Konzentrators eine oder mehrere Flüssigkeitspumpen angeordnet sind.

Die Trennung der festen Partikel von der wässrigen Schwefelsäure und den schwefelsauren Salzen nach der Calcinierung wird dabei wesentlich vereinfacht, indem den Konvertern und Konzentratoren eine Zentrifuge zugeordnet ist. Dabei ist es vorteilhaft, daß es ausreicht, der gesamten Reaktorbatterie lediglich eine Zentrifuge zuzuordnen, da die drei miteinander in Verbindung stehenden und miteinander kombinierten Konverter und Konzentratoren jeweils im Takt arbeiten und somit jeweils nur ein Konverter calciniertes Produkt vorhält. Es ist aber auch möglich, den unteren Teil der Konverter jeweils als Zentrifuge auszubilden bzw. ihnen eine Zentrifuge zuzuordnen, um die einzelnen Teile der Reaktorbatterie unabhängig voneinander betreiben zu können.

Das erfindungsgemäße Verfahren und die erfindungsgemäße Anlage zeichnen sich insbesondere dadurch aus, daß unter Verwendung des bisher nicht verwendungsfähigen Wärmemülls der in erheblichen Mengen anfallende Rauchgasgips zu nutzbarem Gipshalbhydrat umgewandelt werden kann. Durch die Kopplung dreier Konverter ist das Verfahren annähernd kontinuierlich zu betreiben und durch die Zuordnung gleichmäßiger Wärmeübergang sowohl im Konverter wie im Konzentrator sichergestellt ist.

4

Die Erfindung zeichnet sich insbesondere dadurch aus, daß mit Hilfe des erfindungsgemäßen Verfahrens die Bildung des Calciumsulfat II annähernd unterbunden ist und der gesamte Prozeß bei niedrigeren Temperaturen durchgeführt werden kann. Der Anhydrit II stellt eine äußerst reaktionsträge Verbindung dar, die nur durch spezielle Anregung zu einer Abbindereaktion aktiviert werden kann und daher nicht nur eine Verteuerung des Produktes, sondern auch eine Verkomplizierung des Verfahrens mit sich bringt. Über die Zugabe des Magnesiumoxids kann ein qualitativ hochwertiges Endprodukt hergestellt werden, das auch hohen Verarbeitungsansprüchen genügt. Insgesamt ist mit Hilfe dieser zusätzlichen bzw. ergänzenden Verfahrensschritte eine eindeutige Verbesserung des Verfahrens möglich.

Weitere Merkmale und Vorteile des Erfindungsgegenstandes ergeben sich aus der nachfolgenden Zeichnung, in der ein bevorzugtes Ausführungsbeispiel mit den notwendigen Einzelheiten der erfindungsgemäßen Anlage und mit den dazugehörigen Einzelteilen näher erläutert ist. Es zeigen :

Figur 1   einen Schnitt durch einen Konverter und

Figur 2   einen Schnitt durch einen zugeordneten Konzentrator.

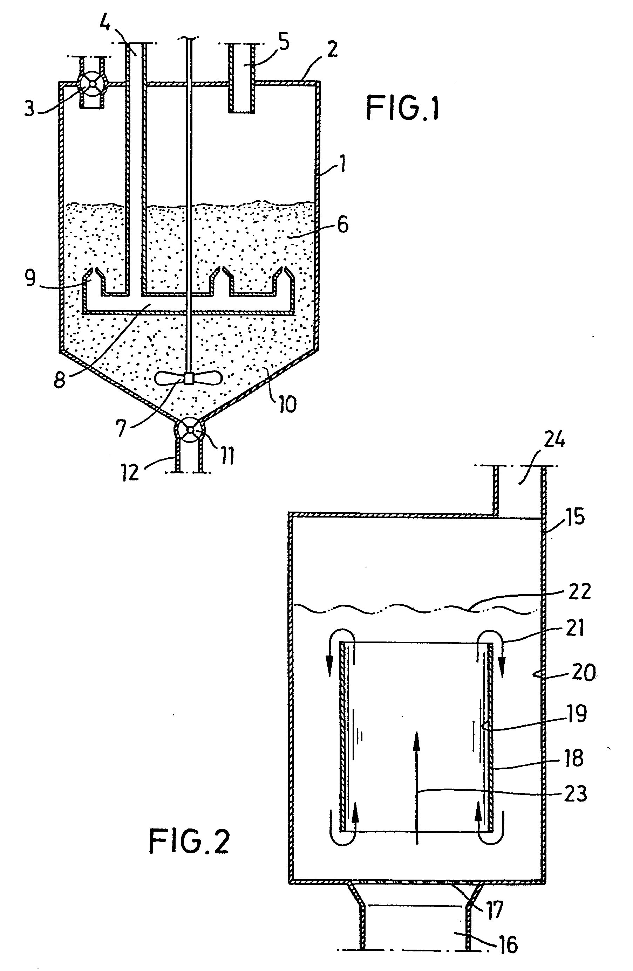

Die Anlage wird von drei Konvertern 1 gebildet, die dem in Fig. 1 gezeigten Konverter entsprechen. Von daher ist auf die Darstellung der übrigen Konverter verzichtet und auch nur ein Konzentrator 15 gezeigt.

In den Deckel 2 des Konverters 1 sind neben dem eine Schleuse 3 aufnehmenden Rohr für die Zuführung des Calciumsulfatdihydrates auch die Wärmezuleitung 4 und die Abführungsleitung 5 eingeführt. Über die Schleuse 3 wird das Calciumsulfatdihydrat jeweils soweit eingefüllt, daß zusammen mit der wässrigen Schwefelsäure und den schwefelsauren Salzen 50 bis 60 % des Gesamtvolumens ausgefüllt werden. Die Dispersion ist mit 6 bezeichnet. Zur Erzielung einer gleichmäßigen Dispersion dient das Rührwerk 7, das unterhalb des Rohrkranzes 8 mit den Düsen 9 oberhalb des Auslauftrichters 10 angeordnet ist. Auf diese Weise wird eine gleichmäßige Durchmischung gewährleistet, so daß über die Schleuse 11 und die Abzugsvorrichtung 12 letztlich nur fertiges Calciumsulfathalbhydrat abgezogen wird.

Die quasi kontinuierliche Betriebsweise der drei Konverter 1 wird dadurch gewährleistet, daß von den drei Konvertern gleichzeitig jeweils ein Konverter aufgefüllt, der zweite bereits aufgefüllte Konverter durch Einleitung des flugaschefreien Wärmemülls aufgeheizt und aus dem dritten Konverter das sedimentierte Fertigprodukt abgezogen wird, das anschließend mittels Filter, Zentrifuge oder Schubzentrifuge vom Reaktionsmedium getrennt wird und zwar dann, wenn es eine Temperatur von über 363 K erreicht hat. Das so gewonnene Reaktionsmedium wird gemeinsam mit dem im dritten Konverter verbliebenen Reaktionsmedium in den ersten Konverter zurückgefördert. Das Fertiggut wird mit Calciumcarbonatmehl neutralisiert und anschließend mit Wärmemüll bei 378 bis 403 K, vorzugsweise 388 K getrocknet.

Fig. 2 zeigt den den Konvertern 1 zugeordneten Konzentrator 15, in dem die wässrigen Schwefelsäuredispersion mit den schwefelsauren Salzen regeneriert wird. Zu diesem Zweck wird über den Einlaß 16 Wärmemüll beispielsweise in Form von Wasserdampf, Warmluft oder Rauchgas über einen Siebboden 17 in das Innere des Konzentrators 15 hineingeschleust. Um zu vermeiden, daß sich der eingeblasene Wärmemüll vorzeitig zu größeren Blaseinheiten vereinigt, wodurch die damit verbundene Verkleinerung der Gesamt-Blasenoberfläche und die daraus resultierende ungünstige Beeinflussung der Wärmeübertragung beeinflußt wird, weist der Konzentrator 15 ein eingezogenes Rohr 18 auf, das genau oberhalb des Siebbodens 17 und des Einlasses 16 angeordnet ist. Über die Zuleitung des Wärmemülls entsteht ein Dispersions-Gasstrom 23, wobei Dispersion und Gas etwa die gleiche Geschwindigkeit aufweisen. Hierdurch wird sowohl die Bildung von größeren Blaseinheiten vermieden als auch ein günstigerer Wärmeübergang von den Gasblasen auf die Dispersion sichergestellt.

Das Rohr 18 endet kurz unterhalb des Dispersionsspiegels 22, so daß der Dispersions-Gasstrom 23 in Form eines Flüssigkeitsstromes 21 umgeleitet und zwischen Rohrwandung 19 und Wand 20 zurück in Richtung Siebboden 17 strömt. Der Wärmemüll bzw. das Gas verläßt über den Auslaß 24 den Konverter 15.


Beispiel I


In einem Technikums-Konverter mit einem Fassungvermögen von 10 Litern wurden 5 Liter einer 20 Gew.-%igen Dispersion von Calciumsulfatdihydrat einer Kornfeinheit kleiner 250 m in einer 20 Gew.-%igen wässrigen Schwefelsäure mittels Warmluft von 120 °C von 45° auf 95 °C mit einer Aufheizgeschwindigkeit von 1,5 K/min erwärmt.

Nach Erreichen der Temperatur von 95 °C wurde das Reaktionsprodukt von der Mutterlauge getrennt und nach Trocknung bei 115 °C mittels Röntgenstrukturanalyse geprüft. Das Reaktionsprodukt war frei von Calciumsulfatdihydrat. Die Hauptmenge des Reaktionsproduktes bestand aus Calciumsulfathalbhydrat neben einem sehr kleinen Anteil Anhydrit III und Spuren von Anhydrit II.

Das Endprodukt Calciumsulfathalbhydrat liegt nach der Trocknung als feinkörniges Material vor, das sowohl in Säcken wie auch in Containern transportiert und dann z. B. unter Tage in Streckenbegleitdämmen oder ähnlichen Bereichen verblasen werden kann, wobei Wasser zugegeben werden muß. Das Endprodukt erreicht sehr früh hohe Festigkeiten, ist gut benetzbar und entwickelt wenig Staub, so daß es für diese Einsatzzwecke besonders geeignet ist. Das Material kann als reines Halbhydrat oder in Mischungen mit ähnlichen Dammbaustoffen verwendet werden.

### Beispiel II

15 kg Abfallprodukt Calciumsulfatdihydrat wurden in 45 Liter einer Lösung von 15 Gew.-% Magnesiumsulfatheptahydrat und 20 Gew.-% Schwefelsäure in Wasser bei 368 Kelvin für eine Zeit von 30 Minuten digeriert.

Danach wurde der Bodenkörper durch Zentrifugieren von der Mutterlösung getrennt und nach Neutralisation mittels Calciumcarbonat bei 378 Kelvin getrocknet.

Erhalten wurden 12,3 kg Alphagipshalbhydrat.

Das so erhaltene Alphagipshalbhydrat wurde analysiert und als charakteristische Bestandteile wurden gefunden:

| | |
|---|---|
| — Alpha-$CaSO_4 \times 1/2\ H_2O$ | 98,3 Gew.-% |
| — $CaSO_4$II | 0,17 Gew.-% |
| — $MgSO_4 \times 7\ H_2O$ | 1,4 Gew.-% |

Bei der Verarbeitung des Alphagipshalbhydrates wurden 3,5 Gew.-% Magnesiumoxid zugegeben, wodurch ein ausblühfreies Endprodukt erhalten wurde.


**Ansprüche**

1. Verfahren zur Herstellung von Alphagips-Halbhydrat, insbesondere zur Calcinierung des bei der Rauchgasentschwefelung von Kraftwerken anfallenden Calciumsulfat-Dihydrates oder eines Chemiegipses, dadurch gekennzeichnet, daß aus Calciumsulfat-Dihydrat mit einer Kornfeinheit von kleiner 250 μm und aus wässriger Schwefelsäure eine Dispersion hergestellt und unter Zufuhr von industriellem, staubfreiem Wärmemüll unter Einhaltung einer Aufheizgeschwindigkeit von 1 bis 3 K/min auf 90 bis 100 °C erwärmt wird, woraufhin die festen Bestandteile von der wässrigen Schwefelsäure getrennt und anschließend bei 105 bis 130 °C getrocknet werden.

2. Verfahren zur Herstellung von Alphagips-Halbhydrat, insbesondere zur Calcinierung des bei der Rauchgasentschwefelung von Kraftwerken anfallenden Calciumsulfat-Dihydrates oder eines Chemiegipses, dadurch gekennzeichnet, daß die wässrige Schwefelsäure jeweils unter Verdunstung des bei der Dissoziationsreaktion freigesetzten Kristallwassers getrennt aufgeheizt und das Calciumsulfat-Dihydrat dann in die heiße, wässrige Schwefelsäure eingeleitet wird, weiter unter Zufuhr von industriellem, staubfreiem Wärmemüll unter Einhaltung einer Aufheizgeschwindigkeit von 1 bis 3 K/min auf 90 bis 100 °C erwärmt wird, woraufhin die festen Bestandteile von der wässrigen Schwefelsäure getrennt und anschließend bei 105 bis 130 °C getrocknet werden.

3. Verfahren nach Anspruch 2, dadurch gekennzeichnet, daß die wässrige Schwefelsäure soweit aufgeheizt wird, daß sich bei Zuleitung des Calciumsulfat-Dihydrates mindestens die für das Freisetzen des Kristallwassers notwendige Dissoziationstemperatur einstellt.

4. Verfahren nach Anspruch 2 und Anspruch 3, dadurch gekennzeichnet, daß der Wärmemüll bei der Aufheizung der wässrigen Schwefelsäure in der gleichen Strömungsrichtung und in Übereinstimmung mit deren Fließgeschwindigkeit eingeleitet wird.

5. Verfahren nach Anspruch 1 oder Anspruch 2, dadurch gekennzeichnet, daß das Calciumsulfat-Dihydrat in die wässrige Schwefelsäure bis zur Erreichung einer Konzentration von 10 bis 50 Gew.-%, vorzugsweise 15 bis 25 Gew.-% eingeleitet wird.

6. Verfahren nach Anspruch 1 oder Anspruch 2, dadurch gekennzeichnet, daß eine schwefelsaure, wässrige Dispersion mit einer Konzentration an Schwefelsäure von 15 bis 55 Gew.-%, vorzugsweise 20 Gew.-% eingesetzt wird.

7. Verfahren nach Anspruch 1 oder Anspruch 2, dadurch gekennzeichnet, daß der industrielle, staubfreie Wärmemüll vorzugsweise in Form von Dampf zur direkten und/oder indirekten Beheizung der wässrigen Schwefelsäure und/oder des Gemisches unter Einhaltung einer Aufheizgeschwindigkeit von 1,5 K/min eingeführt wird.

8. Verfahren nach Anspruch 1, dadurch gekennzeichnet, daß die Aufheizgeschwindigkeit von 1,5 K/min eingehalten wird, sobald eine Kompensation des beim Aufheizvorgang resultierenden Dampfverlustes durch das beim Calciervorgang frei werdende Kristallwasser erfolgt.

9. Verfahren nach Anspruch 1 oder Anspruch 2, dadurch gekennzeichnet, daß das bei der Rauchgasentschwefelung anfallende Calciumsulfat-Dihydrat unmittelbar der Calcinierung zugeführt wird.

10. Verfahren nach Anspruch 1 oder Anspruch 2, dadurch gekennzeichnet, daß das Calciumsulfat-Dihydrat bei Erreichen einer Temperatur über 90 °C von der wässrigen Schwefelsäure getrennt wird.

11. Verfahren nach Anspruch 1 oder Anspruch 2, dadurch gekennzeichnet, daß der wässrigen

## 0 044 005

Schwefelsäure und/oder der Dispersion zur Erreichung vorgegebener Kristallstrukturen Additive, wie Aluminiumsulfat, Kalialaun, Kaliumsulfat u. ä., zugemischt werden.

12. Verfahren nach Anspruch 1 und Anspruch 11, dadurch gekennzeichnet, daß das Calciumsulfat-Dihydrat in wässriger, schwefelsaurer Lösung in Gegenwart von schwefelsauren Salzen calciniert wird.

13. Verfahren nach Anspruch 12, dadurch gekennzeichnet, daß das Calciumsulfat-Dihydrat in wässriger Lösung von Schwefelsäure und 5 bis 10 Gew.-% Aluminiumsulfat-octadekahydrat calciniert wird.

14. Verfahren nach Anspruch 12, dadurch gekennzeichnet, daß das Calciumsulfat-Dihydrat in wässriger Lösung von Schwefelsäure und 7,5 bis 15 Gew.-% Kaliumaluminiumsulfatdodekahydrat calciniert wird.

15. Verfahren nach Anspruch 12, dadurch gekennzeichnet, daß das Calciumsulfat-Dihydrat in wässriger Lösung von 20 Gew.-% Schwefelsäure und 7,5 Gew.-% Magnesiumsulfatheptahydrat calciniert wird.

16. Verfahren nach Anspruch 12, dadurch gekennzeichnet, daß das Calciumsulfat-Dihydrat in wässriger Lösung von Schwefelsäure und 5 bis 10 Gew.-% Aluminiumsulfatoctadekahydrat und 7,5 bis 15 Gew.-% Magnesiumsulfatheptahydrat calciniert wird.

17. Verfahren nach Anspruch 12 und Anspruch 15 und Anspruch 16, dadurch gekennzeichnet, daß dem Alphagips-Halbhydrat bei und/oder nach der Trocknung Magnesiumoxid beigemischt wird.

18. Verfahren nach Anspruch 17, dadurch gekennzeichnet, daß dem Alphagips-Halbhydrat 2,5 bis 6, vorzugsweise 3,5 Gew.-% Magnesiumoxid zugemischt wird.

19. Anlage zur Durchführung des Verfahrens nach Anspruch 1, Anspruch 2 und/oder einem der nachfolgenden Ansprüche, mindestens drei bestehend aus mit oberhalb der Auslauftrichter angeordneten Rührwerken ausgerüsteten Konvertern, die zu einer Reaktorbatterie gekoppelt sind und quasi kontinuierlich beschickt werden, dadurch gekennzeichnet, daß die Wärmezuleitung (4) in einen Rohrkranz (8) mit nach oben gerichteten Düsen (9) einmündet, der in Höhe des Auslauftrichters (10) angeordnet ist.

20. Anlage nach Anspruch 19, dadurch gekennzeichnet, daß den Konvertern (1) jeweils ein Konzentrator (15) vorgeschaltet ist.

21. Anlage nach Anspruch 19 und Anspruch 20, dadurch gekennzeichnet, daß innerhalb des Konzentrators (15) oberhalb des den Wärmemüll zuführenden Einlasses (15) ein unterhalb des Dispersionsspiegels (22) endendes Rohr (18) angeordnet ist.

22. Anlage nach Anspruch 21, dadurch gekennzeichnet, daß zwischen Rohrwandung (19) und Wand (20) des Konzentrators (15) eine oder mehrere Flüssigkeitspumpen angeordnet sind.

23. Anlage nach Anspruch 19 und Anspruch 20, dadurch gekennzeichnet, daß den Konvertern (1) und Konzentratoren (15) eine Zentrifuge zugeordnet ist.

24. Anlage nach Anspruch 23, dadurch gekennzeichnet, daß der untere Teil der Konverter (1) jeweils als Zentrifuge ausgebildet ist.

### Claims

1. Process for production of alpha-gypsum semi-hydrate, particularly for the calcination of the calcium sulphate dihydrate occurring in power station flue gas desulphurization or of a chemical gypsum, characterized by the fact that a dispersion is produced from calcium sulphate dihydrate with a grain fineness of less than 250 m and from aqueous sulphuric acid and is heated with the supply of industrial dust-free heat refuse to 90-100 °C, a heating-up speed of 1-3 K/min being maintained, after which the solid particles are separated from the aqueous sulphuric acid and then dried at 105-130 °C.

2. Process for production of alpha-gypsum semi-hydrate, particularly for calcination of the calcium sulphate dihydrate occurring in power station flue gas desulphurization or of a chemical gypsum, characterized by the fact that the aqueous sulphuric acid is heated up separately, in each case with evaporation of the crystal water released in the dissociation reaction, and then caused to enter the hot aqueous sulphuric acid, and also with the supply of industrial dust-free heating refuse, maintaining a heating-up speed of 1-3 K/min, to between 90 and 100 °C, after which the solid constituents are separated from the aqueous sulphuric acid and then dried at between 105 and 130 °C.

3. Process in accordance with Claim 2, characterized by the fact that the aqueous sulphuric acid is heated up until, when the calcium sulphate dihydrate is introduced, at least the dissociation temperature required for the release of the crystal water is obtained.

4. Process in accordance with Claim 2 and Claim 3, characterized by the fact that the heating refuse, on the heating-up of the aqueous sulphuric acid, is introduced in the same direction of flow and in accordance with the flow velocity of the latter.

5. Process in accordance with Claim 1 or Claim 2, characterized by the fact that the calcium sulphate dihydrate is introduced into the aqueous sulphuric acid until a concentration of 10 to 50 % by weight, preferably 15 to 25 % by weight, is obtained.

6. Process in accordance with Claim 1 or Claim 2, characterized by the fact that a sulphate aqueous dispersion is used of which the sulphuric acid concentration amounts to between 15 and 55 % by weight, preferably 20 % by weight.

7

7. Process in accordance with Claim 1 or Claim 2, characterized by the fact that the industrial dust-free heating refuse is preferably introduced in the form of steam for the direct and/or indirect heating of the aqueous sulphuric acid and/or of the mixture, a heating-up speed of 1.5 K/min being maintained.

8. Process in accordance with Claim 1, characterized by the fact that the heating-up speed of 1.5 K/min is maintained as soon as the steam loss resulting from the heating-up process is compensated by the crystal water released in the calcination process.

9. Process in accordance with Claim 1 or Claim 2, characterized by the fact that the calcium sulphate dihydrate occurring in the flue gas desulphurization is directly subjected to calcination.

10. Process in accordance with Claim 1 or Claim 2, characterized by the fact that the calcium sulphate dihydrate is separated from the aqueous sulphuric acid when a temperature of over 90° is reached.

11. Process in accordance with Claim 1 or Claim 2, characterized by the fact that the aqueous sulphuric acid and/or the dispersion is supplied with additives, such as aluminiumsulphate, potassium alum, potassium sulphate etc., in order to obtain preselected crystal structures.

12. Process in accordance with Claim 1 and Claim 11, characterized by the fact that the calcium sulphate dihydrate is calcined in aqueous sulphate solution in the presence of sulphate salts.

13. Process in accordance with Claim 12, characterized by the fact that the calciumsulphate dihydrate is calcined in aqueous solution of sulphuric acid and 5-10 % by weight of aluminium sulphate octadecahydrate.

14. Process in accordance with Claim 12, characterized by the fact that the calcium sulphate dihydrate is calcined in aqueous solution of sulphuric acid and 7.5 to 15 % by weight of potassium aluminium sulphate dodecahydrate.

15. Process in accordance with Claim 12, characterized by the fact that the calcium sulphate dihydrate is calcined in aqueous solution of 20 % by weight of sulphuric acid and 7.5 % by weight of magnesium sulphate heptahydrate.

16. Process in accordance with Claim 12, characterized by the fact that the calcium sulphate dihydrate is calcined in aqueous solution of sulphuric acid and 5-10 % by weight of aluminiumsulphate octadecahydrate and 7.5-15 % by weight of magnesium sulphate heptahydrate.

17. Process in accordance with Claim 12 and Claim 15 and Claim 16, characterized by the fact that magnesium oxide is added to the alphagypsum semi-hydrate during and/or after the drying.

18. Process in accordance with Claim 17, characterized by the fact that 2.5 to 6, preferably 3.5 % by weight of magnesium oxide is added to the alpha-gypsum semi-hydrate.

19. Apparatus for the performance of the process described in Claim 1, Claim 2 and/or one of the subsequent claims, consisting of at least three converters which are equipped with stirring units situated above the outlet hopper and which are coupled to a reactor battery and which are fed quasi-continuously, characterized by the fact that the heating pipe 4 leads into a ring of piping with nozzles 9 directed upwards and situated on a level with the outlet hopper 10.

20. Apparatus in accordance with Claim 19, characterized by the fact that each of the converters 1 is preceded by a concentrator 15.

21. Apparatus in accordance with Claim 19 and Claim 20, characterized by the fact that within the concentrator 15, above the inlet 15 through which the heating refuse is introduced, a pipe 18 is provided which terminates underneath the dispersion level 22.

22. Apparatus in accordance with Claim 21, characterized by the fact that one or more liquid pumps are provided between the pipe wall 19 and the wall 20 of the concentrator 15.

23. Apparatus in accordance with Claim 19 and Claim 20, characterized by the fact that a centrifuge is associated with the converters 1 and concentrators 15.

24. Apparatus in accordance with Claim 23, characterized by the fact that the centrifuge is the converters 1 lower part.

**Revendications**

1. Procédé de préparation d'hémihydrate de gypse alpha, en particulier pour calciner le sulfate de calcium dihydraté obtenu lors de la désulfuration des gaz de fumée de centrales thermiques ou un gypse chimique, procédé caractérisé en ce qu'on prépare une dispersion, à partir de sulfate de calcium dihydraté ayant une finesse de grains inférieure à 250 µm et à partir d'acide sulfurique aqueux dilué et, en introduisant de la chaleur industrielle perdue, sans poussières, et en maintenant une vitesse d'échauffement de 1 à 3 K/min, on chauffe jusqu'à 90 à 100 °C, puis l'on sépare les constituants solides de l'acide sulfurique aqueux et on les sèche ensuite entre 105 et 130 °C.

2. Procédé de préparation de l'hémihydrate de gypse alpha, en particulier pour calciner le sulfate de calcium dihydraté obtenu lors de la désulfuration des gaz de fumée de centrales thermiques ou un gypse chimique, procédé caractérisé en ce qu'on chauffe séparément l'acide sulfurique aqueux ou dilué en vaporisant l'eau de cristallisation libérée lors de la réaction de dissociation et en ce qu'on introduit ensuite le sulfate de calcium dihydraté dans l'acide sulfurique aqueux chaud, on continue à chauffer en introduisant de la chaleur industrielle perdue, sans poussières, en maintenant une vitesse d'échauffe-

# 0 044 005

ment de 1 à 3 K/min jusqu'à 90 à 100 °C, puis l'on sépare les constituants solides de l'acide sulfurique aqueux et on les sèche ensuite entre 105 et 130 °C.

3. Procédé selon la revendication 2, caractérisé en ce qu'on chauffe l'acide sulfurique aqueux jusqu'à ce que, par introduction du sulfate de calcium dihydraté, on obtienne au moins la température de dissociation nécessaire pour la libération de l'eau de cristallisation.

4. Procédé selon la revendication 2 et la revendication 3, caractérisé en ce qu'on introduit, lors du chauffage de l'acide sulfurique aqueux, la chaleur perdue dans la même direction d'écoulement et en coïncidence avec la vitesse d'écoulement de cet acide.

5. Procédé selon la revendication 1 ou la revendication 2, caractérisé en ce qu'on introduit le sulfate de calcium dihydraté dans l'acide sulfurique aqueux jusqu'à obtention d'une concentration de 10 à 50 % en poids, de préférence 15 à 25 % en poids.

6. Procédé selon la revendication 1 ou la revendication 2, caractérisé en ce qu'on utilise une dispersion aqueuse d'acide sulfurique présentant une concentration en acide sulfurique de 15 à 55 % en poids, de préférence de 20 % en poids.

7. Procédé selon la revendication 1 ou la revendication 2, caractérisé en ce qu'on introduit la chaleur industrielle perdue, sans poussières, de préférence sous forme de vapeur d'eau pour chauffer directement et/ou indirectement l'acide sulfurique aqueux et/ou le mélange en maintenant une vitesse d'échauffement de 1,5 K/min.

8. Procédé selon la revendication 1, caractérisé en ce qu'on maintient la vitesse d'échauffement de 1,5 K/min dès que se produit une compensation de la perte de vapeur d'eau résultant du processus de chauffage et provenant de l'eau de cristallisation libérée lors du processus de calcination.

9. Procédé selon la revendication 1 ou la revendication 2, caractérisé en ce qu'on achemine directement vers la calcination le sulfate de calcium dihydraté obtenu lors de la désulfuration de gaz de fumée.

10. Procédé selon la revendication 1 ou la revendication 2, caractérisé en ce qu'on sépare le sulfate de calcium dihydraté de l'acide sulfurique aqueux dès qu'est atteinte une température supérieure à 90 °C.

11. Procédé selon la revendication 1 ou la revendication 2, caractérisé en ce qu'on incorpore à l'acide sulfurique aqueux et/ou à la dispersion, pour obtenir des structures cristallines prédéterminées, des additifs comme du sulfate d'aluminium, de l'alun de potassium, du sulfate de potassium, notamment.

12. Procédé selon la revendication 1 et la revendication 11, caractérisé en ce qu'on calcine le sulfate de calcium dihydraté en solution sulfurique aqueuse en présence de sels de l'acide sulfurique.

13. Procédé selon la revendication 12, caractérisé en ce qu'on calcine le sulfate de calcium dihydraté en solution aqueuse d'acide sulfurique comportant 5 à 10 % en poids de sulfate d'aluminium octadécahydraté.

14. Procédé selon la revendication 12, caractérisé en ce qu'on calcine le sulfate de calcium dihydraté en solution aqueuse d'acide sulfurique contenant 7,5 à 15 % en poids de sulfate d'aluminium et de potassium dodécahydraté.

15. Procédé selon la revendication 12, caractérisé en ce qu'on calcine le sulfate de calcium dihydraté en solution aqueuse contenant 20 % en poids d'acide sulfurique et 7,5 % en poids de sulfate de magnésium heptahydraté.

16. Procédé selon la revendication 12, caractérisé en ce qu'on calcine le sulfate de calcium dihydraté en solution aqueuse contenant de l'acide sulfurique, 5 à 10 % en poids de sulfate d'aluminium octadécahydraté et 7,5 à 15 % en poids de sulfate de magnésium heptahydraté.

17. Procédé selon la revendication 12, la revendication 15 et la revendication 16, caractérisé en ce qu'on incorpore de l'oxyde de magnésium à l'hémihydrate de gypse alpha pendant et/ou après son séchage.

18. Procédé selon la revendication 17, caractérisé en ce qu'on incorpore à l'hémihydrate de gypse alpha 2,5 à 6, de préférence 3,5 % en poids d'oxyde de magnésium.

19. Installation pour la mise en œuvre du procédé selon la revendication 1, la revendication 2 et/ou l'une des revendications suivantes, consistant en au moins trois convertisseurs équipés d'agitateurs disposés au-dessus des trémies de décharge, qui sont couplés de manière à former une batterie de réacteurs et sont alimentés de façon quasi continue, installation caractérisée en ce que le conduit (4) d'introduction de chaleur débouche dans un tube annulaire (8) comportant des buses (9) dirigées vers le haut et qui est disposé dans le haut de la trémie (10) de décharge.

20. Installation selon la revendication 19, caractérisée en ce qu'un concentrateur (15) est à chaque fois associé au convertisseur (1).

21. Installation selon la revendication 19 et la revendication 20, caractérisée en ce qu'à l'intérieur du concentrateur (15), au-dessus de l'admission (16) d'introduction de la chaleur perdue, est disposé un tube (18) se terminant sous le niveau (22) de la dispersion.

22. Installation selon la revendication 21, caractérisée en ce que, entre la paroi (19) du tube (18) et la paroi (20) du concentrateur (15) sont disposées une ou plusieurs pompes à liquide.

23. Installation selon la revendication 19 et la revendication 20, caractérisée en ce qu'une centrifugeuse est associée aux convertisseurs (1) et concentrateurs (15).

24. Installation selon la revendication 23, caractérisée en ce que la partie inférieure du convertisseur (1) est à chaque fois réalisée sous forme de centrifugeuse.

9

FIG.1

FIG.2